# EUROPÄISCHE PATENTSCHRIFT

(11) **EP 3 002 548 B1**
(45) Veröffentlichungstag und Bekanntmachung des Hinweises auf die Patenterteilung: **14.09.2016**
(21) Anmeldenummer: 14187405.7
(22) Anmeldetag: 02.10.2014
(51) Int. Cl.: G01B 11/02, G02B 3/14, H01L 27/146, G06K 7/00, G02B 3/00, G02B 26/08, H04N 13/04

(54) **Beleuchtungseinrichtung und Verfahren zum Erzeugen eines Beleuchtungsfeldes**
Illumination device and method for generating an illumination field
Dispositif d'éclairage et procédé destiné à la production d'une zone d'éclairage

(43) Veröffentlichungstag der Anmeldung: 06.04.2016
(73) Patentinhaber: SICK AG, 79183 Waldkirch (DE)
(72) Erfinder: Schneider, Dr. Florian, 79276 Reute (DE)
(74) Vertreter: Ludewigt, Christoph

(56) Entgegenhaltungen:
- EP-A1- 1 394 593
- WO-A1-01/59360
- WO-A1-2008/157604
- WO-A2-2009/034511
- DE-U1-202011 110 543
- US-A- 5 438 486
- US-A- 5 864 128
- US-A1- 2008 204 548

## Beschreibung

Die Erfindung betrifft eine Beleuchtungseinrichtung zum Erzeugen eines Beleuchtungsfeldes nach dem Oberbegriff von Anspruch 1.

Für die Inspektion oder Vermessung von Objekten werden häufig Kamerasysteme eingesetzt, welche auch zum Lesen von Barcodes weite Verbreitung gefunden haben. Dabei werden Bilder des Objektes erfasst und entsprechend der Aufgabe durch Bildverarbeitungsverfahren ausgewertet. Eine weitere Anwendung von Kameras ist das Lesen von Codes. Derartige kamerabasierte Codeleser lösen die noch weit verbreiteten Barcode-Scanner zunehmend ab. Mit Hilfe eines Bildsensors werden Objekte mit den darauf befindlichen Codes aufgenommen, in den Bildern die Codebereiche identifiziert und dann decodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

Alle diese Anwendungen haben gemein, dass sie eine Beleuchtung benötigen, um den zu lesenden Barcode bzw. die zu inspizierenden und zu vermessenden Objekte unabhängig vom Umgebungs- oder Fremdlicht zu erfassen. Zu diesem Zweck weisen diese Kamerasysteme Lichtquellen auf, die häufig als LEDs ausgebildet sind. Im Vergleich zu den ebenfalls gelegentlich verwendeten Laserlichtquellen haben LEDs meist eine divergentere Abstrahlungscharakteristik und größere Abstrahlflächen.

Darüber hinaus ist bekannt, Vergusslinsen zur Strahlfokussierung direkt auf ein LED-Gehäuse aufzubringen.

In der DE 602 15 093 T2 ist eine steuerbare flüssige Mikrolinse offenbart, welche aus einer Isolierschicht und einem Tröpfchen einer transparenten leitenden Flüssigkeit besteht, die auf einem Trägermaterial angeordnet ist. Die Mikrolinse enthält mehrere Elektroden, wobei sich die Position der Mikrolinse durch die, an den Elektroden jeweilig angelegten Spannungen verändern lässt.

Aus dem Stand der Technik ist weiterhin eine Beleuchtungsvorrichtung bekannt, bei welcher eine LED ein Strahlführungselement in Form einer festen TIR-Linse (Total Internal Reflection) beleuchtet und welche zur effizienten Projektion des Lichtes in die Szene eingesetzt wird. An das Strahlführungselement schließt sich ein Mikrolinsenarray aus Silikon an, auf welchem eine Deckplatte aus Glas aufliegt. Durch eine Krafteinwirkung wird die Deckplatte an das elastische Mikrolinsenarray gedrückt und somit das Mikrolinsenarray deformiert. Durch die Deformation des Mikrolinsenarrays wird das Beleuchtungsfeld geformt.

Aus der WO2009/034511 A2 ist eine Beleuchtungseinrichtung nach dem Oberbegriff bekannt.

Es ist die Aufgabe der Erfindung, eine Beleuchtungseinrichtung zur Erzeugung eines Beleuchtungsfeldes für einen optoelektronischen Sensor anzugeben, der konstruktiv einfach herstellbar ist.

Diese Aufgabe wird durch eine Beleuchtungseinrichtung nach Anspruch 1 gelöst. Dabei geht die Erfindung von dem Grundgedanken aus, dass das optische Strahlformungselement direkt auf der Lichtquelle aufliegt und durch einen, an dem Strahlformungselement angreifenden Druck dieses Strahlformungselement zur Lichtformung deformiert wird. Das Strahlformungselement bildet dabei mit der Lichtquelle eine einfach zu betätigende kompakte Einheit. Auf ein Strahlführungselement kann dabei verzichtet werden.

In einem Strahlengang hinter dem Strahlformungselement, der Lichtquelle abgewandt, ist ein Mikrolinsen aufweisendes Mustererzeugungselement angeordnet, welches einen Erfassungsbereich des optoelektronischen Sensors durch ein Beleuchtungsmuster sichtbar macht. Ein solches Mustererzeugungselement erlaubt die Einstellung der Größe bzw. der Art der Zielgeometrie des optoelektronischen Sensors.

Das Mustererzeugungselement ist als adaptiver, Mikrolinsen aufweisender Punktmustergenerator ausgebildet, welcher bei einer mechanischen Druckbeanspruchung der elastisch ausgebildeten Mikrolinsen durch die aus einem festen Material bestehenden Deckplatte in Abhängigkeit der vertikal angreifenden Druckkraft ein Beleuchtungsmuster mit variierendem Punktdurchmesser erzeugt. Mittels einer solchen adaptiven Punktmusterbeleuchtung ist eine Umschaltung zwischen einem Punktlichtmuster und einer homogenen Beleuchtung, was ein Beleuchtungsmuster ohne Struktur darstellt, einfach möglich. Hierbei wird die homogene Beleuchtung der Szene verwendet, um neben der 3D-Information (mit strukturierter Beleuchtung) Grauwertbilder aufzunehmen. Diese zusätzliche Information kann zur reinen Darstellung oder algorithmischen Auswertung des Erfassungsbereiches des optoelektronischen Sensors verwendet werden.

Um beispielsweise bei einem Objektivwechsel des Kamerasystems des optoelektronischen Sensors die Zielgeometrie an den Sichtbereich des Objektivs anzupassen, bestehen die Mikrolinsen aus einem elastischen oder festen Material und sind auf einem festen Trägermaterial angeordnet, wobei eine beweglich gelagerte, vorzugsweise lateral verschiebliche, aus einem festen oder elastischen Material bestehende, transparente Abdeckung auf den Mikrolinsen aufliegt. Die Druckbeaufschlagung der Mikrolinsen bewirkt eine Vergrößerung der Krümmungsradien bzw. der Brennweiten der Mikrolinsen. Dies hat eine Verringerung der Strahldivergenz und somit eine Verkleinerung des Lichtmusters im Erfassungsbereich des optoelektronischen Sensors zur Folge. Die optische Strahlformung im deformierten bzw. undeformierten Zustand der Mikrolinsen kann durch eine asphärische oder frei geformte oder sphärische Linsenoberfläche und/oder Oberfläche der Deckplatte verändert werden. Die Mikrolinsen können dabei auch ein Mikrolinsenarray bilden. Anstelle eines elastischen Mikrolinsenarrays und einer festen transparenten Deckplatte können ein festes Mikrolinsenarray und eine elastische Deckplatte verwendet werden.

Das Mustererzeugungselement besteht bevorzugt aus zwei gekreuzten, vorzugsweise senkrecht zueinander stehenden, elastischen Mikrolinsenarrays, die durch eine Trennplatte voneinander beabstandet sind, wobei jedes Mikrolinsenarray mit je einer festen Deckplatte abgedeckt ist und die Deckplatten unabhängig voneinander lateral und/oder vertikal beweglich ausgebildet sind. Durch die jeweilige Bewegung einer der Deckplatten in lateraler Richtung entsteht eine Scherung des jeweiligen Mikrolinsenarrays, was zu einer nicht rotationssymmetrischen Deformation der Mikrolinsen führt. Dadurch wird das Beleuchtungsmuster im Erfassungsbereich des optoelektronischen Sensors lateral verschoben. Dies hat den Vorteil, dass die Position des Beleuchtungsmusters an den Sichtbereich der Kamera angepasst werden kann, wenn diese Kamera ein neues Objektiv erhält oder wenn das Beleuchtungsmustermuster an eine bevorzugte Stelle im Kamerasichtbereich positioniert werden soll. Die gekreuzte Ausführung der Mikrolinsenarrays ermöglicht darüber hinaus eine individuelle Einstellung der zwei Dimensionen des Beleuchtungsmusters.

Besonders einfach ist es möglich, von einem strukturierten auf ein homogenes Lichtmuster umzuschalten, wenn der Punktmustergenerator bei einer lateralen Deformation des Mikrolinsenarrays durch die Deckplatte ein Beleuchtungsmuster erzeugt, welches lateral im Erfassungsbereich verschoben ist. Durch diese laterale Verschiebung der festen Deckplatte entsteht eine Scherung des Mikrolinsenarrays, was zu einer nicht rotationssymmetrischen Deformation der Mikrolinsen führt. Dies hat zur Folge, dass das Punktmuster lateral verschoben wird und auf diese Weise die Position des Punktmusters an die zu betrachtende Szene angepasst wird.

Für alle beschriebenen Ausführungsbeispiele gilt alternativ, dass anstelle der elastisch ausgebildeten Mikrolinsen auch feste Mikrolinsen verwendet werden können, wobei eine elastische Deckplatte an den Mikrolinsen angreift.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer optoelektronischen Kamera mit einer Beleuchtungseinrichtung,
- Fig. 2: ein Ausführungsbeispiel einer erfindungsgemäßen Beleuchtungseinrichtung,
- Fig.3: ein erstes Ausführungsbeispiel der Funktionsweise der erfindungsgemäßen Beleuchtungseinrichtung nach Fig. 2,
- Fig.4: ein weiteres Ausführungsbeispiel der Funktionsweise der erfindungsgemäßen Beleuchtungseinrichtung nach Fig. 2,
- Fig.5: ein weiteres Ausführungsbeispiel der Funktionsweise der erfindungsgemäßen Beleuchtungseinrichtung nach Fig. 2,
- Fig. 6: eine simulierte Oberflächengeometrie einer deformierten sphärischen Mikrolinse,
- Fig.7: ein erstes Ausführungsbeispiel einer Funktionsweise eines adaptiven Mustererzeugungselementes,
- Fig.8: ein zweites Ausführungsbeispiel der Funktionsweise eines adaptiven Mustererzeugungselementes,
- Fig.9: ein weiteres Ausführungsbeispiel der Funktionsweise eines adaptiven Mustererzeugungselementes,
- Fig. 10: ein Ausführungsbeispiel zur Funktionsweise eines Punktmustergenerators,
- Fig. 11: ein weiteres Ausführungsbeispiel zur Funktionsweise eines Punktmustergenerators.

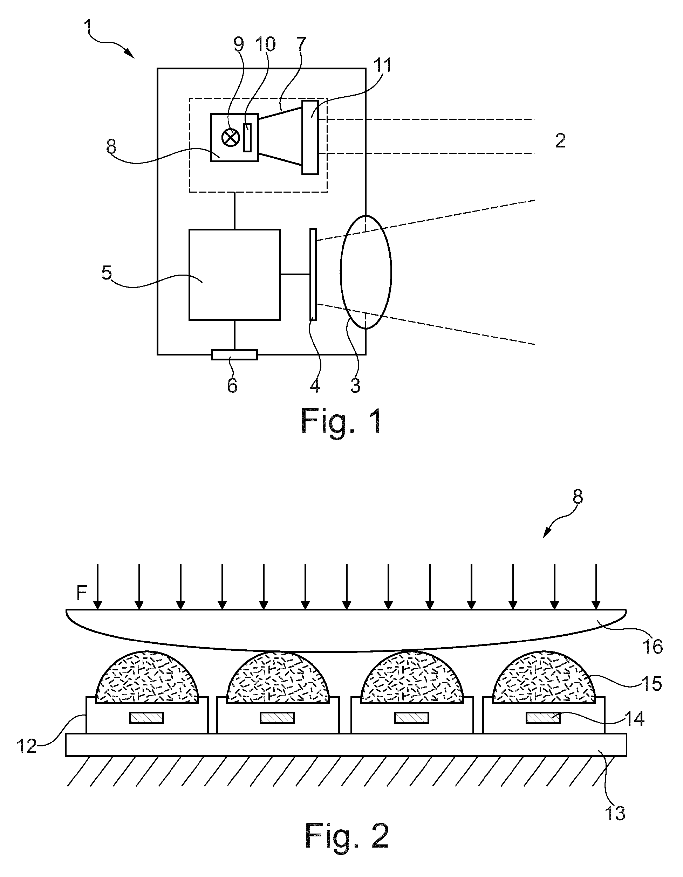

Fig. 1 zeigt eine schematische Darstellung eines optoelektronischen Sensors 1. Der optoelektronische Sensor 1 ist beispielsweise ein kamerabasierter Codeleser, kann aber ebenso ein anderer optoelektronischer Sensor sein, dessen Erfassungsbereich 2 ausgerichtet werden soll und deshalb von einer Visualisierung mittels einer Zieleinrichtung profitiert.

Der optoelektronische Sensor 1 empfängt Licht aus dem Erfassungsbereich 2. Im Falle eines Codelesers können sich dort beispielsweise Objekte mit zu lesenden Codes befinden. Das Licht aus dem Erfassungsbereich 2 wird durch ein Aufnahmeobjektiv oder eine Empfangsoptik empfangen, die vereinfacht durch eine Linse 3 dargestellt ist. Ein Lichtempfänger 4 wandelt das Empfangslicht in ein elektrisches Signal um. Bei dem Lichtempfänger 4 handelt es sich beispielsweise um eine Photodiode oder, wie bei einem kamerabasierten Codeleser, um einen CCD- oder CMOS-Chip mit einer Vielzahl von zu einer Zeile oder einer Matrix angeordneten Pixelelementen.

Das elektrische Signal des Lichtempfängers 4 wird einer Auswerteeinheit 5 zugeführt, die daraus Objektinformationen des Erfassungsbereiches 2 gewinnt. Im Beispiel des Codelesers enthält das elektrische Signal Bilddaten aus einem Lesefeld in dem Erfassungsbereich 2. In diesen Bilddaten werden Codebereiche gesucht und die Codeinformationen innerhalb von Codebereichen werden decodiert. Das Ergebnis der Auswertung wird an einem Ausgang 6 bereitgestellt.

Der optoelektronische Sensor 1 umfasst weiterhin eine Beleuchtungseinrichtung 7, welche eine kompakte Einheit 8 umfasst, bestehend aus einer Lichtquelle 9, beispielsweise eine Halbleiterlichtquelle, wie eine LED, eine Laserdiode oder eine VC-SEL, und einem Strahlformungselement 10. Weiterhin ist in der Beleuchtungseinrichtung 7 ein Mustererzeugungselement 11 angeordnet. In dem Erfassungsbereich 2 wird damit ein Beleuchtungsmuster erzeugt, um die Lage des Erfassungsbereiches 2 sichtbar zu machen und somit den optoelektronischen Sensor 1 auf einen gewünschten Erfassungsbereich 2 richten zu können.

In Fig. 2 ist ein erstes Ausführungsbeispiel der kompakten Einheit 8 der Beleuchtungseinrichtung 7 dargestellt, welche dabei als deformierbares LED-Vergusslinsen-Array 12 ausgebildet ist. Bei einem solchen LED-Vergusslinsen-Array 12 sind auf einer Trägerplatte 13 mehrere LEDs 14 befestigt, wobei jede einzelne LED 14 mit einer sphärisch ausgebildeten Vergusslinse 15 aus einem elastischen Material verspritzt ist, so dass die LED 14 und die Vergusslinse 15 die kompakte Einheit 8 bilden. Dabei wird in einem Spritzgussprozess die Vergusslinse 15 aus einem Polymer hergestellt und mit der LED 14 zu einer Beleuchtung assembliert. Ein solches LED-Vergusslinsenarray 12 wird mit einer transparenten, aus einem festen Material bestehenden Deckplatte 16, welche in vorliegenden Fall eine inhomogene Dicke aufweist, zusammengedrückt, wobei das so betätigte deformierte LED-Vergusslinsen-Array 12 zur adaptiven Strahlformung des von den LEDs 14 ausgestrahlten Lichtes genutzt wird.

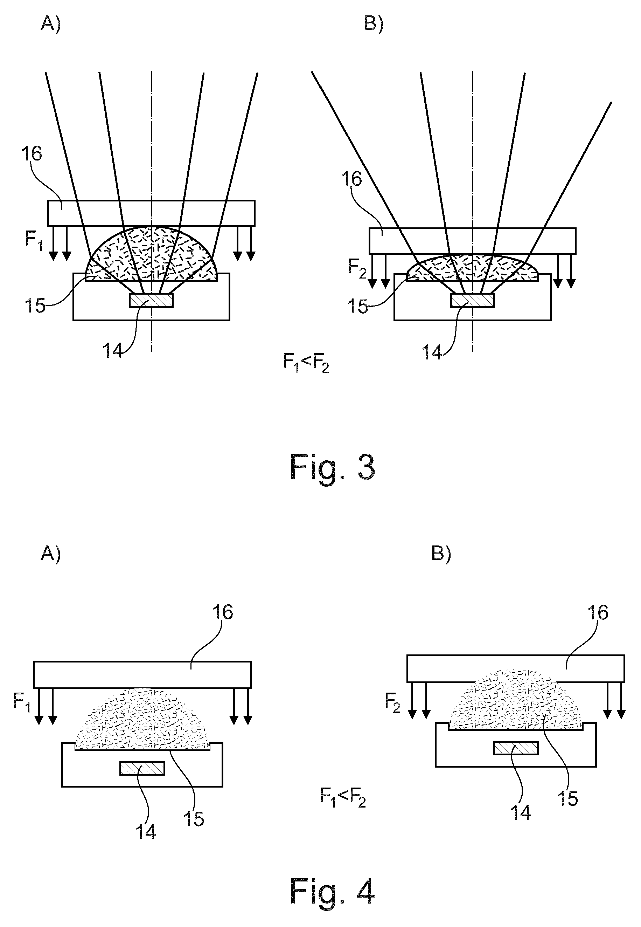

Ein Ausführungsbeispiel einer Funktionsweise einer einzelnen, mit einer LED 14 vergossenen Vergusslinse 15, die eine sphärische Linsenoberfläche aufweist, ist in Fig. 3 ersichtlich. Dabei wird durch die feste Deckplatte 16 eine Kraft F1 auf die elastische Vergusslinse 15 ausgeübt (Fig. 3A). Wird die anliegende homogene Kraft F2 gegenüber der Kraft F1 verstärkt, wird die elastische Vergusslinse 15 zusammengedrückt und deformiert (Fig. 3B). Die Abflachung der sphärischen Linsenform im inneren Bereich führt zu einer optischen Strahlformung. Infolge der Deformation der elastischen Vergusslinse 15 wird das von der LED 14 ausgegebene Licht divergent beeinflusst. Alternativ zu der beschriebenen sphärischen Linsenform ist aber auch eine asphärische oder frei geformte Linsenoberfläche einsetzbar.

Wie aus Fig. 4 ersichtlich, funktioniert ein solches Strahlformungselement 10 aber auch dann, wenn die Vergusslinse 15 fest ausgebildet ist und die Deckplatte 16 aus einem elastischen Material besteht. Dabei verformt sich, wie aus Fig. 4 ersichtlich, die Deckplatte 16, was ebenfalls zu einer Strahlformung des von der LED 14 abgegebenen Lichtstrahles führt.

Somit sind unterschiedliche Materialkombinationen für Deckplatte 16 und Vergusslinse 15 möglich. Besteht die Vergusslinse 15 aus einem elastischen Material wie beispielsweise Silikon, so kann die Deckplatte 16 aus einem festen Material wie Glas oder Polymer ausgebildet sein. Alternativ kann die Vergusslinse 15 aber auch aus einem festen Material wie Glas und die Deckplatte 16 aus dem elastischen Material wie Silikon bestehen. In einer weiteren Alternative können sowohl Vergusslinse 15 als auch Deckplatte 16 aus einem voll- oder teilelastischen Material hergestellt sein.

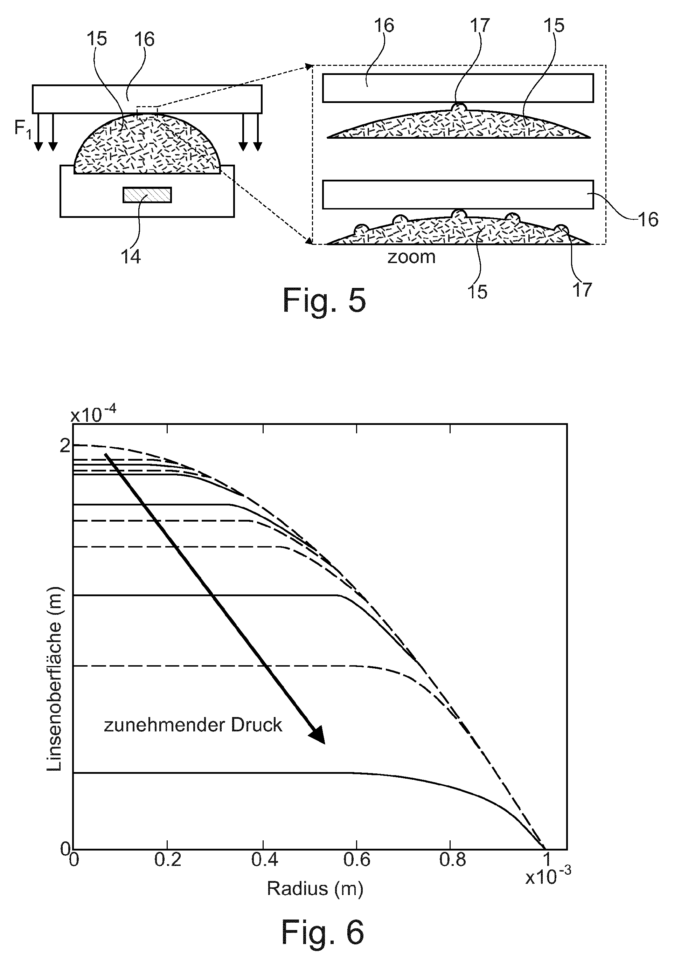

In Fig. 5 ist auf der Oberfläche der sphärisch ausgebildeten Vergusslinse 15 eine Noppe 17 ausgebildet. Diese Noppe 17 ist insbesondere in dem Bereich der Oberfläche der Vergusslinse 15 ausgebildet, wo die Linsenoberfläche zuerst die Deckplatte 16 berührt. Diese Noppe 17 im Kontaktbereich zwischen elastischer Vergusslinse 15 und fester Deckplatte 16 hat den Vorteil, dass eine Hysterese der Beleuchtungsdivergenz unterbunden wird, indem die Kontaktfläche zwischen elastischer Vergusslinse 15 und fester Deckplatte 16 minimiert wird. Dieser Effekt kann verbessert werden, wenn auf der Oberfläche der Vergusslinse 15 in vorgegebenen Abständen mehrere Noppen 17 ausgebildet sind.

In Fig. 6 ist eine simulierte Oberflächengeometrie der beschriebenen deformierten sphärischen Vergusslinse 15 dargestellt, woraus hervorgeht, dass bei einem auf die Vergusslinse 15 wirkenden Druck infolge der homogenen Kraft die Abflachung der sphärischen Linsenform im inneren Bereich der Vergusslinse 15 erfolgt.

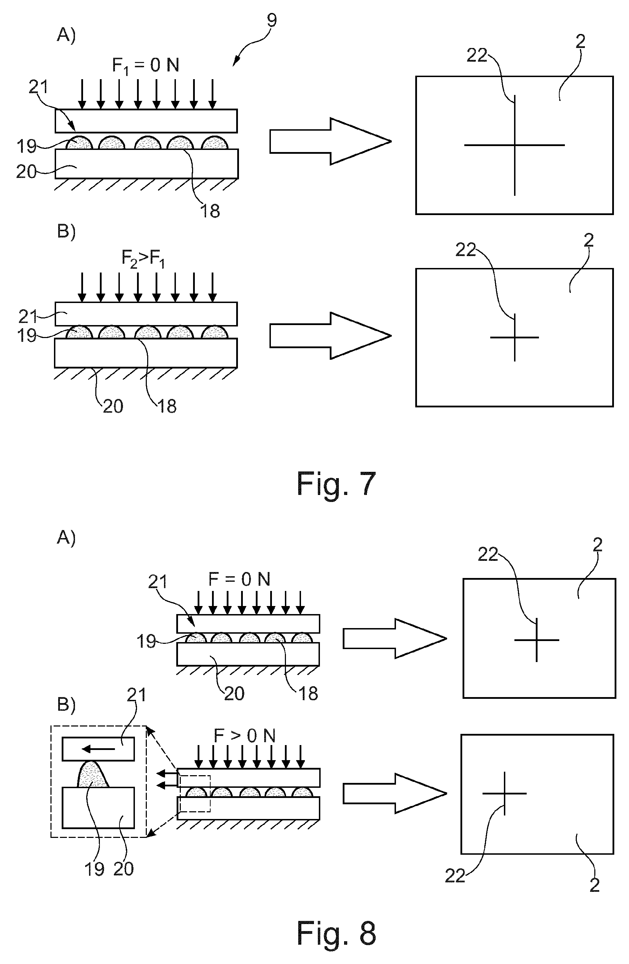

Fig. 7 zeigt ein Mustererzeugungselement 11 der Beleuchtungseinrichtung 7, welche ebenfalls als Mikrolinsenarray 18 ausgebildet ist, bei dem eine vorgegebene Anzahl aus elastischen Mikrolinsen 19 auf einem festen Trägermaterial 20 positioniert sind. Ein solches Mustererzeugungselement 11 wird bei einer Neujustierung des optoelektronischen Sensors 1 benötigt. Über den Mikrolinsen 19 ist eine transparente, aus festem Material bestehende Deckplatte 21 angeordnet, die in Fig. 7A ohne eine weitere Krafteinwirkung auf den Mikrolinsen 19 aufliegt. Das Ergebnis ist, dass das, von dem Mikrolinsenarray 18 im Erfassungsbereich 2 des optoelektronischen Sensors 1 erzeugte Beleuchtungsmuster ein Zielkreuz 22 darstellt. Wird auf die Deckplatte 21 mit einer homogenen Kraft F2, welche größer ist als F1, gegen die elastischen Mikrolinsen 19 gedrückt, so bewirkt diese Druckbeaufschlagung der Mikrolinsen 19 eine Vergrößerung der Krümmungsradien und somit der Brennweiten der Mikrolinsen 19. Dies hat eine Verringerung der Strahldivergenz und somit eine Verkleinerung der Dimension des Zielkreuzes 22 zur Folge, wie es in Fig. 7B dargestellt ist. Auch hier können anstelle eines elastischen Mikrolinsenarrays und einer festen transparenten Deckplatte ein festes Mikrolinsenarray und eine elastische Deckplatte verwendet werden.

Im druckbeaufschlagtem Zustand (F>0) des elastischen Mikrolinsenarrays 18 besteht die Möglichkeit, dieses lateral zu deformieren, wie aus Fig. 8 hervorgeht. Dabei befindet sich das Zielkreuz 22 im unbelasteten Zustand in der Mitte des Erfassungsbereiches 2 (Fig.8A). Durch die laterale Verschiebung der festen transparenten Deckplatte 21 und der gleichzeitigen Druckbeaufschlagung der Mikrolinsen 19 entsteht eine Scherung des Mikrolinsenarrays 18, was zu einer nicht rotationssymmetrischen Deformation der Mikrolinsen 19 führt, wie in Fig. 8B dargestellt. Dies hat zur Folge, dass das Zielkreuz 22 im Erfassungsbereich 2 lateral verschoben wird. Auf diese Weise kann die Position des Zielkreuzes 22 in dem Erfassungsbereich des optoelektronischen Sensors 1 angepasst oder an einer bestimmten bevorzugten Stelle im Erfassungsbereich 2 positioniert werden.

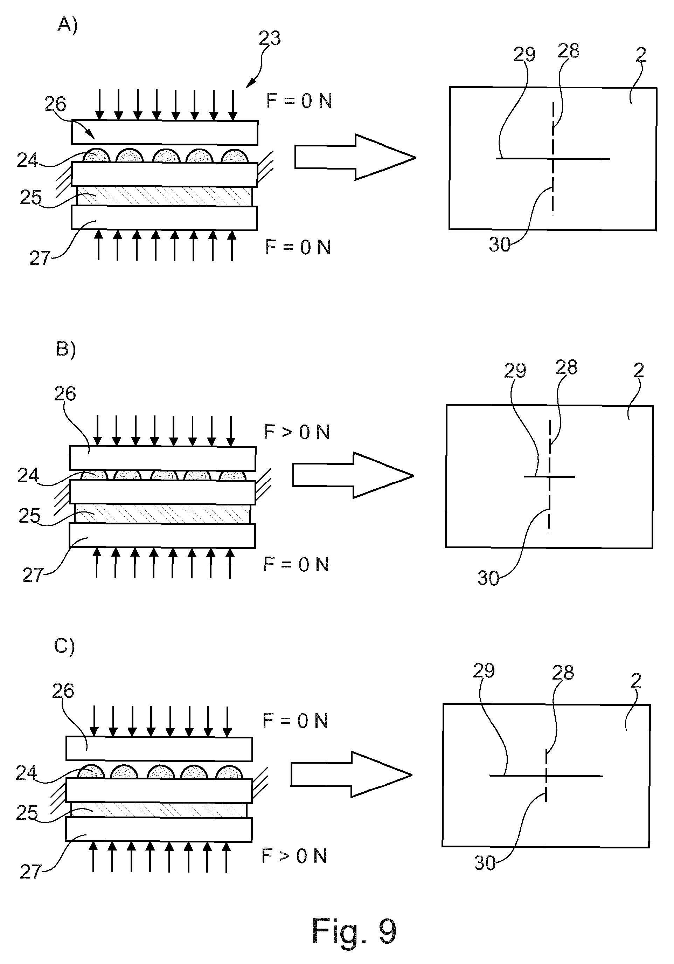

Es besteht auch die Möglichkeit, die zwei Dimensionen des Zielkreuzes 28 individuell voneinander einzustellen. Zu diesem Zweck besteht das Mustererzeugungselement 23 aus zwei gekreuzten elastischen Mikrolinsenarrays 24, 25. Die Orientierung von Mikrolinsenarray 24 ist senkrecht zur Orientierung vom Mikrolinsenarray 25, wobei die beiden Mikrolinsenarrays 24, 25 zu beiden Seiten eines Trägerelementes angeordnet sind. Im vorgegebenen Beispiel wird das erste Mikrolinsenarray 24 von einer ersten Deckplatte 26 aus einem festen transparenten Material abgedeckt, während das zweite Mikrolinsenarray 25 von einer zweiten Deckplatte 27 überdeckt wird. Wird keinerlei Kraft auf das erste und das zweite Mikrolinsenarray 24, 25 durch die Deckplatten 26, 27 ausgeübt, so ergibt sich ein Zielkreuz 28 wie es in Fig. 9A gezeigt ist. Durch die individuelle Druckbeaufschlagung des Mikrolinsenelementes 24 über die erste Deckplatte 26 und des zweiten Mikrolinsenarrays 25 durch die zweite Deckplatte 27 verschiebt sich die Dimension des Zielkreuzes 28 in beiden Richtungen unabhängig voneinander. So verkürzt sich der waagerechte Strich 29 des Zielkreuzes 28, wenn nur die Deckplatte 26 mit einer vorgegebenen konstanten Kraft F>0 auf das erste Mikrolinsenarray 24 drückt. Wird dem zweiten Mikrolinsenarray 25 keine Kraft zugeführt, so bleibt der vertikale Strich 30 des Zielkreuzes 28 unverändert (Fig. 9B). In einer Alternative, welche in Fig. 9C dargestellt ist, wird das zweite Mikrolinsenarray 25 durch die zweite Deckplatte 27 mit einer vorgegebenen Kraft F>0 beaufschlagt, wodurch sich der vertikale Strich 30 des Zielkreuzes 28 verkürzt. Da in diesem Fall das erste Mikrolinsenarray 24 druckunbeaufschlagt ist, bleibt der waagerechte Strich 29 des Zielkreuzes 28 unverändert.

Insbesondere bei der Verwendung eines optoelektronischen Sensors 1, der als 3D-Kamerasensor zur Entfernungsmessung ausgebildet ist, basiert das Detektionsprinzip auf Triangulation unter Zuhilfenahme einer aktiven Musterbeleuchtung. In Stereosystemen wird die Beleuchtung zur Generierung eines künstlichen Kontrastes eingesetzt, um dichte Tiefenkanten zu erzeugen und die Abstandswerte periodischer Objekte in der zu betrachtenden Szene eindeutig zu bestimmen. In diesem Fall ist das Mustererzeugungselement als Punktmustergenerator 31 auf der Basis eines Mikrolinsenarrays 32 ausgebildet. Die auf dem Mikrolinsenarray 32 angeordneten Mikrolinsen 33 bestehen aus einem elastischen Material, beispielsweise aus Silikon. Die elastischen Mikrolinsen 33 sind auf einem festen Trägermaterial 34 angeordnet und, wie im Zusammenhang mit Fig. 1 erläutert, ist dieses so geformte Mustererzeugungselement Bestandteil der Beleuchtungseinrichtung 7.

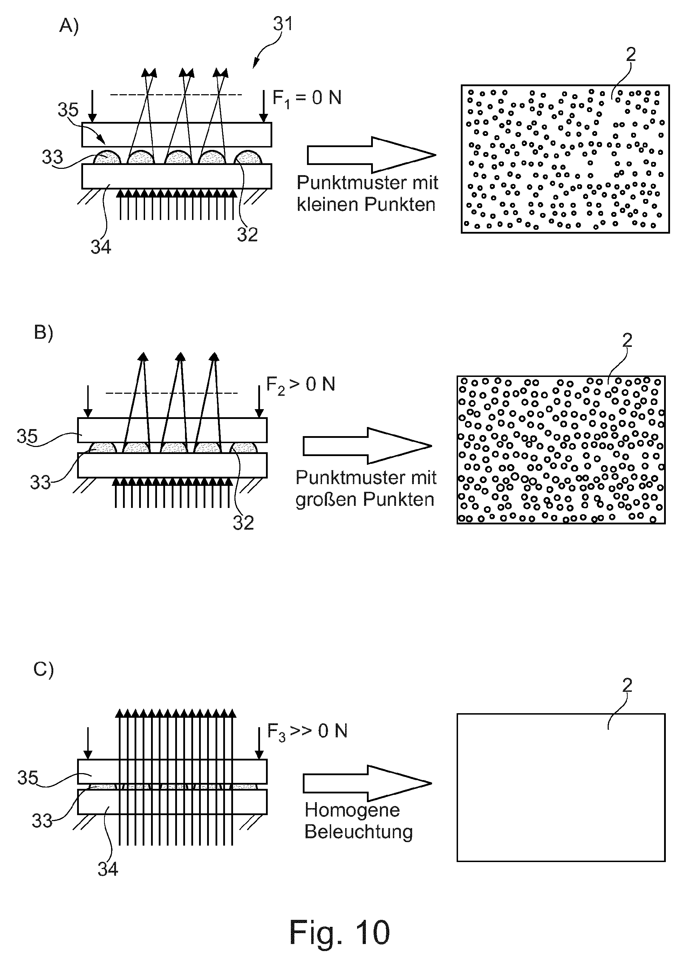

Ein Ausführungsbeispiel für die Funktionsweise eines solchen Punktmustergenerators 31 ist in Fig. 10 dargestellt. Das Mikrolinsenarray 32 des Punktmustergenerators 31 wird von dem Lichtstrahl der Lichtquelle 9 durchleuchtet, wobei, wie aus Fig. 10A ersichtlich, der Lichtstrahl konvergiert. Dies ist immer dann der Fall, wenn keine Kraft auf das Mikrolinsenarray 32 ausgeübt wird. Ohne diese mechanische Druckbeanspruchung bilden die Mikrolinsen 33 des Mikrolinsenarrays 32 in der Fokusebene des Projektionsobjektivs kleine Brennpunkte aus, dessen Lichtmuster zu einem Beleuchtungsmuster mit kleinen Punktdurchmessern führt. Wird gemäß Fig. 10B eine Kraft F2>0 durch die transparente Deckplatte 35 auf das Mikrolinsenarray 32 ausgeübt, deformieren sich die Mikrolinsen 33, wie im Zusammenhang mit Fig. 5 erläutert. Die Deformation führt zu einer Abflachung des Linsenkrümmungsradius in der Linsenmitte, was wiederum zur Verschiebung des Brennpunktes führt. Die Verschiebung des Brennpunktes in der Fokusebene des Projektionsobjektivs führt zur Vergrößerung des Punktdurchmessers des in der Fokusebene des Projektionsobjektivs dargestellten Beleuchtungsmusters.

Wird weiterhin der Druck (F>>0) auf das elastische Mikrolinsenarray 32 erhöht (Fig. 10C), verschwindet die gekrümmte Linsenform vollständig. Übrig bleiben zwei parallele Glasplatten in Form der transparenten Deckplatte 35 und des transparenten Trägermaterials 34 mit einem elastischen Material dazwischen. Bei dieser Position der Mikrolinsen 33 erlischt deren Strahlformungseffekt vollständig. In diesem Zustand wird die Fokusebene des Projektionsobjektivs homogen beleuchtet, was zu einer homogenen Beleuchtung der Szene führt.

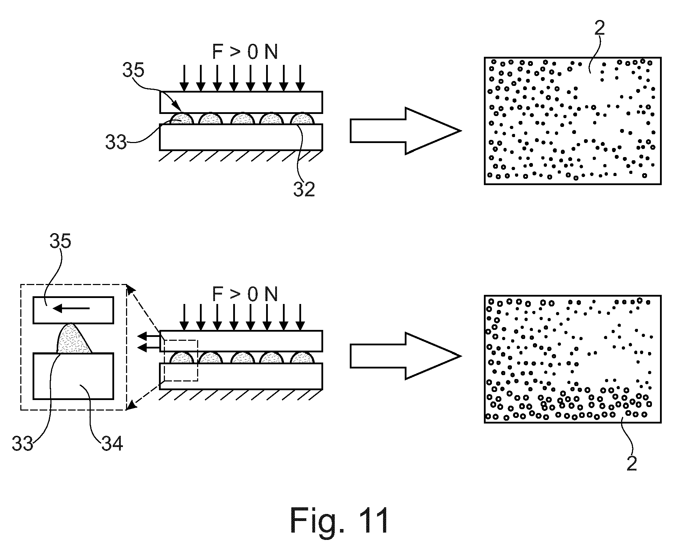

Wird in einem druckbeaufschlagten Zustand des elastischen Mikrolinsenarrays 32 dieses lateral deformiert, wie in Fig. 11 dargestellt, indem eine laterale Verschiebung der Deckplatte 34 vorgenommen wird, entsteht eine Scherung des Mikrolinsenarrays 32, was zu einer nicht rotationssymmetrischen Deformation der Mikrolinsen 33 führt. Dies hat zur Folge, dass das Punktmuster in der Fokusebene des Projektionsobjektivs in Richtung der Verschiebung der Deckplatte 34 verschoben wird (Fig. 11 B). Im Vergleich dazu befindet sich das Punktmuster immer dann, wenn das Mikrolinsenarray 32 frei von einer Druckbeaufschlagung ist, im Zentrum der Fokusebene des Projektionsobjektivs (Fig. 11A). Aufgrund der Verwendung eines solchen Punktmuster-Erzeugungselementes in einer 3D-Stereokamera, lassen sich die Beleuchtungsmuster adaptiv an die Gegebenheiten der zu beleuchtenden Szene anpassen, wobei das Beleuchtungsmuster zwischen strukturiert und homogen adaptiv umgeschaltet werden kann. Dieses Umschalten ermöglicht neben den 3D-Tiefendaten auch die Aufnahme von Grauwertbildern.

Es besteht ebenfalls die Möglichkeit, die Veränderung bzw. Verschiebung des Punktmusters für sichere Stereokameras einzusetzen. In der Sicherheitstechnik muss sichergestellt werden, dass die Bildaufnahme immer zuverlässig funktioniert. Die Funktionalität der Bildsensoren wird dabei mit einem dynamischen Bildsensortest (Hell- und Dunkelbildern) in den Pausen der Stereobildaufnahme mit einer internen Beleuchtungs-LED überprüft. Der Bildsensortest mit interner Beleuchtungs-LED kann eingespart werden, wenn sich das Beleuchtungsmuster

(Position und Größe der Punkte) von Zeit zu Zeit ändert, um die dynamische Funktion der Bildsensoren mit den Grauwertbildern der beiden Kameramodule aus der Szene zu verifizieren.

## Patentansprüche

1. Beleuchtungseinrichtung zum Erzeugen eines Beleuchtungsfeldes für einen optoelektronischen Sensor, die mindestens eine Lichtquelle (9), ein anpassbares optisches Strahlformungselement (10) und ein Druckelement aufweist, wobei das Druckelement an das Strahlformungselement (10) (16) angreift, und zur Lichtformung deformiert, und wobei die Lichtquelle (9) und das Strahlformungselement (10) direkt aneinander grenzen und eine kompakte Einheit (8) bilden, **dadurch gekennzeichnet, dass** im Strahlengang hinter dem Strahlformungselement (10), der Lichtquelle (9) abgewandt, ein Mikrolinsen (19) aufweisendes Mustererzeugungselement (11) angeordnet ist, welches einen Erfassungsbereich (2) des optoelektronischen Sensors (1) durch ein Beleuchtungsmuster (22, 28) sichtbar macht, dass das Mustererzeugungselement (11) als adaptiver, Mikrolinsen (33) umfassender Punktmustergenerator (31) ausgebildet ist, welcher bei einer mechanischen Druckbeanspruchung der elastisch ausgebildeten Mikrolinsen (33) durch die aus einem festen Material bestehenden Deckplatte (35) in Abhängigkeit der senkrecht an den Mikrolinsen (33) angreifenden Druckkraft das Beleuchtungsmuster mit variierendem Punktdurchmesser erzeugt.

2. Beleuchtungseinrichtung nach Anspruch 1, **dadurch gekennzeichnet, dass** der Punktmustergenerator (31) bei einer lateralen Deformation der Mikrolinsen (33) durch die Deckplatte (35) ein Beleuchtungsmuster erzeugt, welches lateral im Erfassungsbereich (2) verschoben ist.

## Claims

1. An illumination device for producing an illumination field for an optoelectronic sensor which has at least one light source (9), an adaptable optical beam shaping element (10) and a pressure element, wherein the pressure element (16) engages at the beam shaping element (10) and deforms it for light shaping; and wherein the light source (9) and the beam shaping element (10) are directly adjacent to one another and form a compact unit (8), **characterized in that** a pattern generating element (11) having microlenses (19) is arranged in the optical path behind the beam shaping element (10) and facing away from the light source (9), said pattern generating element making a detection zone (2) of the optoelectronic sensor (1) visible by an illumination pattern (22, 28); **in that** the pattern generating element (11) is configured as an adaptive point pattern generator (31) which comprises microlenses (33) and which produces the illumination pattern with a varying point diameter on a mechanical pressure exertion on the elastic microlenses (33) by the top plate (35) comprising a solid material in dependence on the perpendicular pressure force engaging at the microlenses (33).

2. An illumination device in accordance with claim 1, **characterized in that** the point pattern generator (31) produces an illumination pattern, which is displaced laterally in the detection zone (2), on a lateral deformation of the microlenses (33) by the top plate (35).

## Revendications

1. Dispositif d'éclairage destiné à la production d'une zone d'éclairage pour un capteur optoélectronique, qui comprend au moins une source de lumière (9) et un élément de formage de rayon (10) optique adaptable et un élément de compression, l'élément de compression attaquant l'élément de formage de rayon (10) et le déformant pour le formage de la lumière, et dans lequel la source de lumière (9) et l'élément de formage de rayon (10) sont directement adjacents l'un à l'autre et forment une unité compacte (8), **caractérisé en ce qu'**en arrière de l'élément de formage de rayon (10) dans le chemin optique, un élément de génération de motif (11) comprenant des microlentilles (19) est agencé en étant détourné de la source de lumière (9), qui rend visible une zone de détection (2) du capteur optoélectronique (1) par un motif d'éclairage (22, 28), **en ce que** l'élément de génération de motif (11) est réalisé sous forme de générateur de motif de points (31) adaptatif comprenant des microlentilles (33), qui, lors d'une sollicitation mécanique par pression des microlentilles (33) réalisées élastiques, génère le motif d'éclairage avec variation du diamètre des points par la plaque de couverture (35) constituée en un matériau solide, en fonction de la force de compression attaquant verticalement les microlentilles (33).

2. Dispositif d'éclairage selon la revendication 1, **caractérisé en ce que** lors de la déformation latérale des microlentilles (33) par la plaque de couverture (35), le générateur de motif de points (31) génère un motif d'éclairage qui est décalé latéralement dans la zone de détection (2).
